# FASCICULE DE BREVET EUROPEEN

(11) **EP 2 885 143 B1**
(45) Date de publication et mention de la délivrance du brevet: **25.03.2020**
(21) Numéro de dépôt: 13731396.1
(22) Date de dépôt: 07.06.2013
(51) Int. Cl.: B60J 5/04

(54) **STRUCTURE DE PORTE DE VÉHICULE AUTOMOBILE MUNIE D'UN RENFORT, RENFORT, PORTE ÉQUIPÉE DE LA STRUCTURE DE PORTE ET VÉHICULE ASSOCIÉS**
KRAFTFAHRZEUGTÜRSTRUKTUR MIT EINER VERSTÄRKUNG UND ZUGEHÖRIGE VERSTÄRKUNG, TÜR MIT DER TÜRSTRUKTUR UND FAHRZEUG
MOTOR VEHICLE DOOR STRUCTURE PROVIDED WITH A REINFORCEMENT, AND ASSOCIATED REINFORCEMENT, DOOR PROVIDED WITH THE DOOR STRUCTURE AND VEHICLE

(30) Priorité: 16.08.2012 FR 1257830
(43) Date de publication de la demande: 24.06.2015
(73) Titulaire: Renault S.A.S., 92100 Boulogne-Billancourt (FR)
(72) Inventeur: GALICHER, Stephane, F-92210 Saint-Cloud (FR)
(86) Numéro de dépôt international: PCT/FR2013/051323
(87) Numéro de publication internationale: WO 2014/027150

(56) Documents cités:
- EP-A1- 2 123 496
- JP-A- S59 230 821
- JP-A- 2000 071 769
- US-A- 3 808 743
- US-A- 3 874 119
- US-A- 3 936 090

## Description

### Domaine technique de l'invention

L'invention concerne le domaine de l'automobile et plus particulièrement les renforts de structure d'un véhicule automobile en cas de choc.

L'invention a pour objet plus particulièrement une structure de porte de véhicule automobile.

### État de la technique

Lors d'un choc sur un véhicule, que cela soit un choc dit frontal ou dit arrière, la structure du véhicule est conformée pour se déformer de manière contrôlée selon l'axe longitudinal du véhicule. Ce contrôle peut être effectué en disposant des renforts de structure à des emplacements prédéterminés. Le document JP2000-71769-A décrit une porte comportant une pièce de renfort a section évolutive pour sa fixation à un panneau intérieur de porte.

On s'intéresse ici plus particulièrement aux portes d'un véhicule.

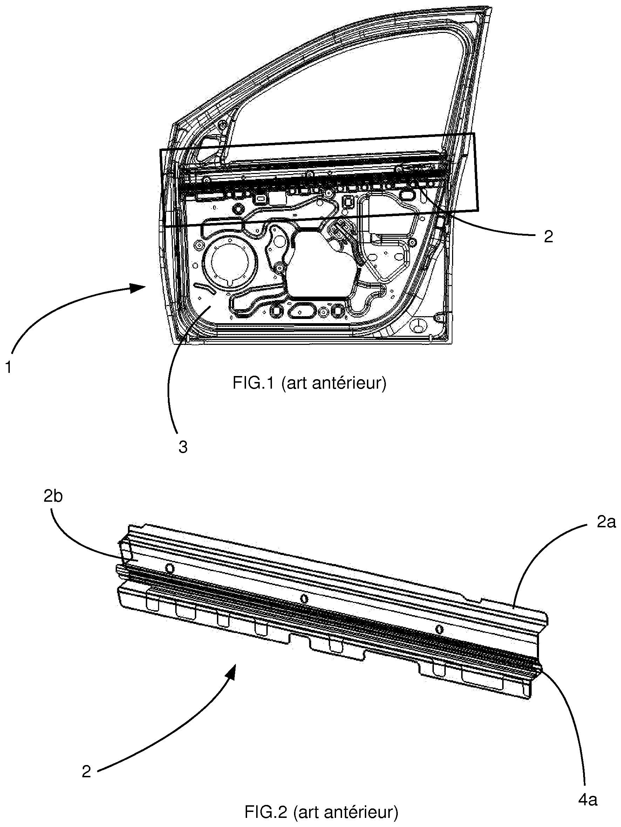

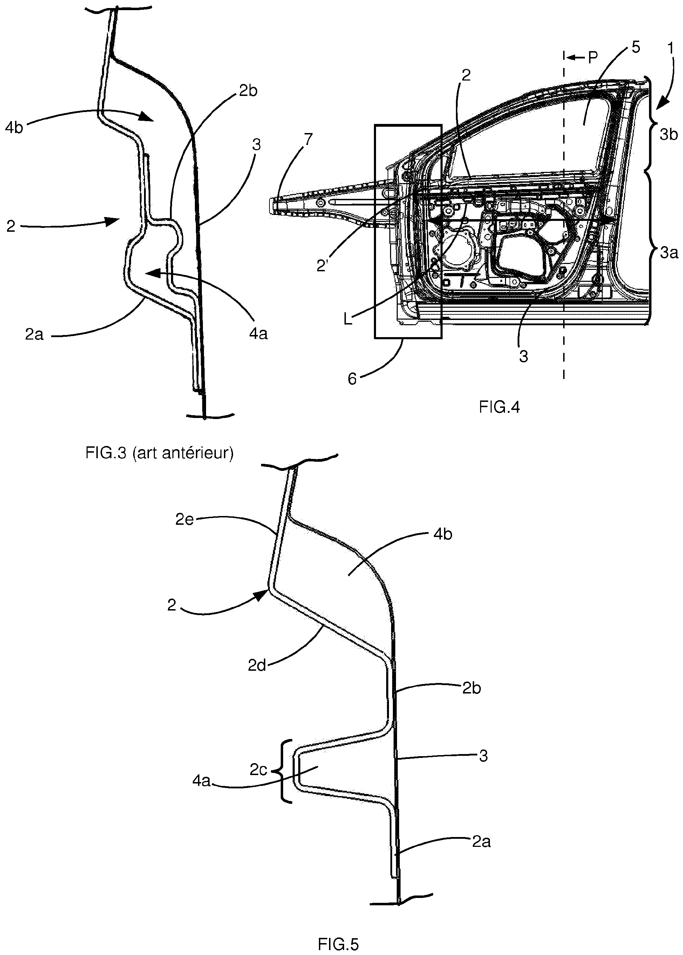

La figure 1 illustre une structure de porte 1 de véhicule connue et les figures 2 et 3 permettent de voir plus en détail un profilé de renfort 2, ou profilé de renfort de bandeau, utilisé dans la structure de porte 1. La structure de porte 1 comporte un caisson structurel de porte 3. Ce caisson structurel 3 définit l'ossature générale de la porte d'un véhicule.
Le profilé de renfort 2 est composé de deux pièces de sorte qu'une première pièce 2a délimite avec une deuxième pièce 2b un premier corps creux 4a. Le profilé de renfort 2 est monté sur le caisson structurel 3 de sorte que la première pièce 2a, la deuxième pièce 2b et le caisson structurel 3 délimitent entre eux un second corps creux 4b.

L'assemblage de ces deux pièces est complexe et a un coût en temps d'assemblage et en fabrication des deux pièces.

### Objet de l'invention

Le but de la présente invention est de proposer une solution ne présentant pas les inconvénients de l'art antérieur. L'invention est définie par les revendications indépendantes 1 et 10.

On tend vers ce but grâce à une structure de porte de véhicule automobile comportant un caisson structurel de porte et un profilé de renfort de bandeau, configuré de sorte à assurer au moins une reprise d'efforts de compression dans sa longueur en cas de choc frontal, ou arrière, appliqué à un véhicule équipé de ladite structure, le caisson structurel et le profilé de renfort de bandeau étant configurés et assemblés entre eux de sorte à délimiter, entre eux, un premier corps creux et un deuxième corps creux chacun de forme tubulaire et allongé suivant ladite longueur du profilé de renfort de bandeau.

Avantageusement, le véhicule comportant un élément de châssis avant participant au châssis du véhicule et permettant à la structure de porte de varier entre une position fermée et une position ouverte relativement au châssis dudit véhicule, le profilé de renfort de bandeau comprend une extrémité, notamment une extrémité en forme de biseau, configurée de sorte à pénétrer dans l'élément de châssis avant en cas de choc frontal, ou arrière, appliqué au véhicule en position fermée de la structure de porte.

Le profilé de renfort peut être obtenu par emboutissage.

Selon une mise en œuvre, la section du profilé de renfort considérée dans un plan de coupe transversal à ladite longueur présente un contour ouvert et configuré de sorte à délimiter une première partie latérale et une partie centrale, en contact avec ledit caisson structurel, et séparées par une partie de liaison délimitant une cavité, ladite cavité délimitant, en association avec le caisson structurel, le premier corps creux, et le contour ouvert délimite une partie de raccordement reliant la partie centrale à une deuxième partie latérale au moins partiellement en contact avec le caisson structurel, le deuxième corps creux étant délimité au moins partiellement par le caisson structurel et la partie de raccordement.

De préférence, la première partie latérale et la partie centrale sont incluses dans un premier plan, et la deuxième partie latérale est incluse dans un deuxième plan parallèle, ou sécant, au premier plan.

Avantageusement, les première et deuxième parties latérales et la partie centrale sont fixées au caisson structurel, notamment par soudure, par rivets ou par collage.

L'invention est aussi relative à une porte de véhicule automobile comprenant une structure telle que décrite. La porte peut comporter un panneau extérieur, configuré pour être visible depuis l'extérieur d'un véhicule équipé de la porte, ledit profilé de renfort de bandeau étant situé entre le caisson structurel et le panneau extérieur.

En outre, la porte peut comporter une vitre disposée entre le profilé de renfort de bandeau et le panneau extérieur.

L'invention est aussi relative à un véhicule automobile comportant une porte telle que décrite.

L'invention est aussi relative à un profilé de renfort de bandeau destiné à être utilisé dans une structure de porte de véhicule automobile, dont une section du profilé de renfort de bandeau, considérée dans un plan de coupe transversal à la longueur dudit profilé de renfort de bandeau, présente un contour ouvert et configuré de sorte à délimiter une première partie latérale et une partie centrale, incluses dans un premier plan et séparées par une partie de liaison délimitant une cavité, et dont le contour ouvert délimite une partie de raccordement reliant la partie centrale à une deuxième partie latérale, opposée à la première partie latérale, ladite deuxième partie latérale étant située dans un second plan différent du premier plan. De préférence, les premier et second plans sont sécants.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue de côté prise de l'extérieur d'un véhicule d'une structure de porte selon l'art antérieur,
- la figure 2 est une vue correspondant à un profilé de renfort de bandeau de la structure de porte de l'art antérieur,
- la figure 3 est une vue en coupe transversale perpendiculaire au sens de la longueur du profilé de renfort de bandeau de la figure 2,
- la figure 4 illustre une structure de porte selon un mode de réalisation de l'invention,
- la figure 5 illustre une vue en coupe de la figure 4 selon un plan de coupe P perpendiculaire au plan de la figure 4 et centrée sur la coopération entre le profilé de renfort de bandeau et le caisson de structure de porte,
- la figure 6 illustre une implémentation de la coupe de la figure 5 dans une porte de véhicule automobile.

### Description de modes préférentiels de l'invention

La structure de porte décrite ci-après diffère de l'art antérieur notamment en ce qu'il n'est utilisé qu'un seul profilé de renfort de bandeau permettant de délimiter avec le caisson structurel les deux corps creux.

Sur la figure 4, la structure de porte 1 de véhicule automobile comporte un caisson structurel 3 de porte. Le caisson structurel 3 de porte peut comporter une partie basse 3a destinée à former le bas de porte et où toute la mécanique de vitre peut être montée, et une partie haute 3b formée, par exemple, par des montants fixes par rapport au bas de porte 3a de sorte à délimiter une ouverture 5 de vitre.

La structure de porte 1 comporte en outre un profilé de renfort 2, ou profilé de renfort de bandeau, configuré de sorte à assurer au moins une reprise d'efforts de compression dans sa longueur en cas de choc frontal, ou arrière, appliqué à un véhicule équipé de ladite structure. Le renfort peut aussi participer aux reprises d'efforts dans le cas d'un choc latéral (barrière et poteau). En fait, par « bandeau », on entend ici une zone du bas de porte à l'interface avec l'ouverture 5 destinée à recevoir la vitre.

Sur la figure 5, le caisson structurel 3 et le profilé de renfort 2 sont configurés et assemblés entre eux de sorte à délimiter, entre eux, un premier corps creux 4a et un deuxième corps creux 4b chacun de forme tubulaire et allongé suivant ladite longueur L (figure 4) du profilé de renfort 2. Ainsi, par tubulaire, on entend que chaque corps creux 4a, 4b possède dans sa longueur une coupe transversale de section fermée. Autrement dit, le premier corps creux 4a est délimité par des faces internes respectivement formées par une première partie du profilé de renfort 2 et une première partie du caisson structurel 3, et est avantageusement délimité uniquement par ces parties de profilé et de caisson. De la même manière, le deuxième corps creux 4b est délimité par des faces internes respectivement formées par une deuxième partie du profilé de renfort 2 et une deuxième partie du caisson structurel 3, et est avantageusement délimité uniquement par ces parties de profilé et de caisson, bien entendu, les premier et deuxième corps creux étant distincts, les première et deuxième parties du profilé de renfort 2 sont distinctes et les première et deuxième parties du caisson structurel 3 sont distinctes.

Avantageusement, le véhicule comporte un élément de châssis avant 6 (représenté par une zone rectangulaire à la figure 4) participant au châssis du véhicule (c'est-à-dire constituant une partie du châssis du véhicule) et permettant à la structure de porte de varier entre une position fermée et une position ouverte relativement au châssis dudit véhicule. Cet élément de châssis 6 avant est aussi connu dans le domaine sous le nom de pied avant (ou pied A). Le profilé de renfort 2 comprend une extrémité 2', notamment une extrémité en forme de biseau, configurée de sorte à pénétrer dans l'élément de châssis avant 6 en cas de choc frontal, ou arrière, appliqué au véhicule en position fermée de la structure de porte 1. Cette pénétration permet d'améliorer le comportement du profilé de renfort en cas de choc, en particulier choc frontal. Typiquement, afin d'améliorer le comportement général du véhicule, cette extrémité biseauté 2' du profilé de renfort 2 est configurée de sorte à traverser l'élément de châssis 6 pour venir en contact avec un renfort 7 monté sur le châssis du véhicule. Ce renfort 7 est aussi connu dans le domaine sous le nom de renfort de doublure de pied avant. Dès lors, en cas de choc important le renfort 7 coopère avec le profilé de renfort 2 pour contrôler la déformation du véhicule. Le biseau évite que le bandeau ne s'échappe du pied avant, permettant ainsi le passage des efforts lors du choc dans la porte, et évite que la porte ne soit comprimée et que la zone (ou cellule) de sécurité des occupants soit dégradée. De plus, le biseau permet d'éviter l'ajout de pion de rétention sur la caisse dans la zone du pied avant. Un pion de rétention permet d'éviter l'échappement d'un bandeau lorsqu'il ne comprend pas de biseau. Dès lors, on comprend qu'en cas de non présence d'un biseau, l'élément de châssis peut comporter un pion de rétention.

La forme du biseau sera préférentiellement réalisée de sorte que l'extrémité du profilé de renfort 2 formant l'arête de pointe du biseau soit à l'interface entre le renfort et le caisson structurel 3. Plus l'arête est proche du caisson meilleure sera la réactivité du bandeau lors d'un choc. En effet, la distance de séparation étant plus courte, il y aura moins de temps perdu lors de la compression des pièces en cas de choc.

Avantageusement, le profilé de renfort 2 est obtenu par emboutissage.

Selon une mise en œuvre particulière du profilé de renfort illustrée sur la figure 5, une section du profilé de renfort 2, considérée dans un plan de coupe transversal à ladite longueur du profilé de renfort 2, présente un contour ouvert et configuré de sorte à délimiter une première partie latérale 2a et une partie centrale 2b, en contact avec ledit caisson structurel 3, et séparées par une partie de liaison 2c délimitant une cavité, ladite cavité délimitant, en association avec le caisson structurel 3, le premier corps creux 4a. Le contour ouvert délimite une partie de raccordement 2d reliant la partie centrale 2b à une deuxième partie latérale 2e au moins partiellement en contact avec le caisson structurel 3, le deuxième corps creux 4b étant délimité au moins partiellement par le caisson structurel 3 et la partie de raccordement 2d (sur l'exemple particulier de la figure 5, une portion de la deuxième partie latérale 2e n'est pas en contact avec le caisson structurel 3 et délimite donc en partie le deuxième corps creux 4b). Selon un mode de réalisation particulier, la première partie latérale 2a et la partie centrale 2b sont incluses dans un premier plan, et la deuxième partie latérale est incluse dans un deuxième plan parallèle, ou sécant, au premier plan. Par parties latérales, on entend deux parties opposées situées à des extrémités distales du contour issu de la coupe.

Le contour de la coupe du profilé de renfort 2 est avantageusement sensiblement identique sur tout ou partie de la longueur du profilé de renfort 2.

Autrement dit, en prenant le profilé de renfort seul, de préférence, une section du profilé de renfort 2, considérée dans un plan de coupe transversal à la longueur L dudit profilé de renfort 2, présente un contour ouvert et configuré de sorte à délimiter une première partie latérale 2a et une partie centrale 2b, incluses dans un premier plan et séparées par une partie de liaison 2c délimitant une cavité. Le contour ouvert délimite une partie de raccordement 2d reliant la partie centrale 2b à une deuxième partie latérale 2e, opposée à la première partie latérale 2a, ladite deuxième partie latérale 2e étant située dans un second plan différent du premier plan. Selon une mise en œuvre, les premier et second plans sont sécants.

De manière avantageuse, les première et deuxième parties latérales 2a, 2e et la partie centrale 2b sont fixées au caisson structurel 3, notamment par soudure, par rivets ou par collage. Ceci permet au caisson structurel 3 de participer à la reprise d'effort au niveau des zones où il est fixé au profilé de renfort 2.

Une porte de véhicule automobile peut comprendre une structure de porte 1 de véhicule automobile telle que décrite précédemment.

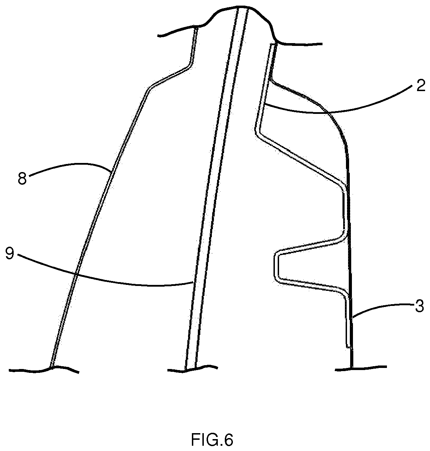

En outre, la porte peut comporter (figure 6) un panneau extérieur 8, configuré pour être visible depuis l'extérieur d'un véhicule équipé de la porte, ledit profilé de renfort 2 étant situé entre le caisson structurel 3 et le panneau extérieur 8.

La porte peut aussi comporter une vitre 9 disposée entre le profilé de renfort 2 et le panneau extérieur 8.

La porte est avantageusement une porte avant de conducteur ou de passager, mais l'invention peut aussi s'appliquer aux portes arrière.

Bien entendu, un véhicule automobile peut comporter une porte telle que décrite ci-dessus.

## Revendications

1. Structure de porte (1) de véhicule automobile comportant un caisson structurel (3) de porte et un profilé de renfort de bandeau (2), configuré de sorte à assurer au moins une reprise d'efforts de compression dans sa longueur (L) en cas de choc frontal, ou arrière, appliqué à un véhicule équipé de ladite structure (1), le caisson structurel (3) et le profilé de renfort de bandeau (2) sont configurés et assemblés entre eux de sorte à délimiter, entre eux, un premier corps creux (4a) et un deuxième corps creux (4b) chacun de forme tubulaire et allongé suivant ladite longueur (L) du profilé de renfort de bandeau (2), **caractérisée en ce qu'**un contour de la coupe du profilé de renfort étant identique sur toute la longueur (L) dudit profilé de renfort de bandeau (2), le bandeau étant une zone du bas de porte à l'interface avec une ouverture (5) destinée à recevoir une vitre, chaque corps creux (4a, 4b) possédant dans sa longueur une coupe transversale de section fermée, **et en ce que,** le véhicule comportant un élément de châssis (6) avant participant au châssis du véhicule et permettant à la structure de porte de varier entre une position fermée et une position ouverte relativement au châssis dudit véhicule, le profilé de renfort de bandeau (2) comprend une extrémité (2') en forme de biseau, configurée de sorte à pénétrer dans l'élément de châssis (6) avant en cas de choc frontal, ou arrière, appliqué au véhicule en position fermée de la structure de porte (1).

2. Structure de porte selon la revendication précédente, **caractérisée en ce que** le profilé de renfort de bandeau (2) est obtenu par emboutissage.

3. Structure de porte selon la revendication 1 ou 2, **caractérisée en ce qu'**une section du profilé de renfort de bandeau (2) considérée dans un plan de coupe transversal à ladite longueur (L) présente un contour ouvert et configuré de sorte à délimiter une première partie latérale (2a) et une partie centrale (2b), en contact avec ledit caisson structurel (3), et séparées par une partie de liaison (2c) délimitant une cavité, ladite cavité délimitant, en association avec le caisson structurel (3), le premier corps creux (4a), **et en ce que** le contour ouvert délimite une partie de raccordement (2d) reliant la partie centrale (2b) à une deuxième partie latérale (2e) au moins partiellement en contact avec le caisson structurel (3), le deuxième corps creux (4b) étant délimité au moins partiellement par le caisson structurel (3) et la partie de raccordement (2d).

4. Structure de porte selon la revendication 3, **caractérisée en ce que** la première partie latérale (2a) et la partie centrale (2b) sont incluses dans un premier plan, **et en ce que** la deuxième partie latérale (2e) est incluse dans un deuxième plan parallèle, ou sécant, au premier plan.

5. Structure de porte selon l'une des revendications 3 ou 4, **caractérisée en ce que** les première et deuxième parties latérales (2a, 2e) et la partie centrale (2b) sont fixées au caisson structurel (3), notamment par soudure, par rivets ou par collage.

6. Porte de véhicule automobile comprenant une structure selon l'une des revendications 1 à 5.

7. Porte selon la revendication précédente, **caractérisée en ce qu'**elle comporte un panneau extérieur (8), configuré pour être visible depuis l'extérieur d'un véhicule équipé de la porte, ledit profilé de renfort de bandeau (2) étant situé entre le caisson structurel (3) et le panneau extérieur (8).

8. Porte selon la revendication 7, **caractérisée en ce qu'**elle comporte une vitre (9) disposée entre le profilé de renfort de bandeau (2) et le panneau extérieur (8).

9. Véhicule automobile comportant une porte selon l'une des revendications 6 à 8.

10. Profilé de renfort de bandeau (2) destiné à être utilisé dans une structure de porte (1) de véhicule automobile selon l'une des revendications 1 à 5, avec une section du profilé de renfort de bandeau (2), considérée dans un plan de coupe transversal à la longueur (L) dudit profilé de renfort de bandeau (2), présente un contour ouvert et configuré de sorte à délimiter une première partie latérale (2a) et une partie centrale (2b), incluses dans un premier plan et séparées par une partie de liaison (2c) délimitant une cavité, **et en ce que** le contour ouvert délimite une partie de raccordement (2d) reliant la partie centrale (2b) à une deuxième partie latérale (2e), opposée à la première partie latérale (2a), ladite deuxième partie latérale (2e) étant située dans un second plan différent du premier plan, **caractérisée en ce que** le contour de la coupe du profilé de renfort étant identique sur toute la longueur (L) dudit profilé de renfort de bandeau (2), le profilé de renfort de bandeau (2) comprenant une extrémité (2') en forme de biseau, configurée de sorte à pénétrer dans un élément de châssis (6) avant participant au châssis du véhicule, en cas de choc frontal, ou arrière, appliqué au véhicule en position fermée de la structure de porte (1).

11. Profilé de renfort selon la revendication précédente, **caractérisé en ce que** les premier et second plans sont sécants.

## Patentansprüche

1. Türstruktur (1) für ein Kraftfahrzeug, umfassend einen strukturellen Türkasten (3) und ein Bandverstärkungsprofil (2), das dazu ausgestaltet ist, mindestens eine Aufnahme der Druckbeanspruchungen in seiner Länge (L) bei einem Front- oder Heckaufprall auf ein mit der Struktur (1) ausgestattetes Fahrzeug zu gewährleisten, wobei der strukturelle Kasten (3) und das Bandverstärkungsprofil (2) so ausgestaltet und zusammengefügt sind, dass sie zwischen sich einen ersten Hohlkörper (4a) und einen zweiten Hohlkörper (4b) mit jeweils röhrenartiger und entlang der Länge (L) des Bandverstärkungsprofils (2) langgestreckter Form begrenzen, **dadurch gekennzeichnet, dass** eine Kontur des Schnitts des Verstärkungsprofils über die gesamte Länge (L) des Bandverstärkungsprofils (2) identisch ist, wobei das Band ein Bereich der Türunterseite an der Schnittstelle zu einer Öffnung (5) ist, die dazu bestimmt ist, eine Glasscheibe aufzunehmen, wobei jeder Hohlkörper (4a, 4b) in seiner Länge einen geschlossenen Querschnitt besitzt, und dadurch, dass, wenn das Fahrzeug ein vorderes Chassiselement (6) umfasst, das zum Chassis des Fahrzeugs beiträgt und es der Türstruktur ermöglicht, zwischen einer geschlossenen Stellung und einer geöffneten Stellung relativ zum Chassis des Fahrzeugs zu variieren, das Bandverstärkungsprofil (2) ein Ende (2') in Form einer Abschrägung umfasst, das so ausgestaltet ist, dass es im Fall eines Front- oder Heckaufpralls auf das Fahrzeug bei geschlossener Stellung der Türstruktur (1) in das vordere Chassiselement (6) eindringt.

2. Türstruktur nach dem vorhergehenden Anspruch, **dadurch gekennzeichnet, dass** das Bandverstärkungsprofil (2) durch Tiefziehen erhalten wird.

3. Türstruktur nach Anspruch 1 oder 2, **dadurch gekennzeichnet, dass** ein Querschnitt des Bandverstärkungsprofils (2), betrachtet in einer Schnittebene quer zu der Länge (L), eine Kontur aufweist, die offen ist und so gestaltet ist, dass sie einen ersten seitlichen Abschnitt (2a) und einen mittleren Abschnitt (2b) begrenzt, die in Kontakt mit dem strukturellen Kasten (3) sind und durch einen Verbindungsabschnitt (2c) getrennt sind, der einen Hohlraum begrenzt, wobei der Hohlraum in Kombination mit dem strukturellen Kasten (3) den ersten Hohlkörper (4a) begrenzt, und dadurch, dass die offene Kontur einen Übergangsabschnitt (2d) begrenzt, der den mittleren Abschnitt (2b) mit einem zweiten seitlichen Abschnitt (2e) verbindet, der zumindest teilweise in Kontakt mit dem strukturellen Kasten (3) ist, wobei der zweite Hohlkörper (4b) zumindest teilweise durch den strukturellen Kasten (3) und den Übergangsabschnitt (2d) begrenzt wird.

4. Türstruktur nach Anspruch 3, **dadurch gekennzeichnet, dass** der erste seitliche Abschnitt (2a) und der mittlere Abschnitt (2b) in einer ersten Ebene enthalten sind und dass der zweite seitliche Abschnitt (2e) in einer zweiten Ebene enthalten ist, die parallel zur ersten Ebene ist oder diese schneidet.

5. Türstruktur nach einem der Ansprüche 3 oder 4, **dadurch gekennzeichnet, dass** der erste und der zweite seitliche Abschnitt (2a, 2e) und der mittlere Abschnitt (2b) am strukturellen Kasten (3) befestigt sind, insbesondere durch Schweißen, mit Nieten oder durch Kleben.

6. Kraftfahrzeugtür mit einer Struktur nach einem der Ansprüche 1 bis 5.

7. Tür nach dem vorhergehenden Anspruch, **dadurch gekennzeichnet, dass** sie ein Außenblech (8) umfasst, das dazu ausgestaltet ist, von außerhalb eines mit der Tür ausgestatteten Fahrzeugs sichtbar zu sein, wobei das Bandverstärkungsprofil (2) zwischen dem strukturellen Kasten (3) und dem Außenblech (8) gelegen ist.

8. Tür nach Anspruch 7, **dadurch gekennzeichnet, dass** sie eine Glasscheibe (9) umfasst, die zwischen dem Bandverstärkungsprofil (2) und dem Außenblech (8) angeordnet ist.

9. Kraftfahrzeugtür mit einer Tür nach einem der Ansprüche 6 bis 8.

10. Bandverstärkungsprofil (2), das dazu bestimmt ist, in einer Türstruktur (1) für ein Kraftfahrzeug nach einem der Ansprüche 1 bis 5 verwendet zu werden, mit einem Querschnitt des Bandverstärkungsprofils (2), in einer Schnittebene quer zur Länge (L) des Bandverstärkungsprofil (2) betrachtet, eine Kontur aufweist, die offen ist und so ausgestaltet ist, dass sie einen ersten seitlichen Abschnitt (2a) und einen mittleren Abschnitt (2b) begrenzt, die in einer ersten Ebene enthalten sind und durch einen Verbindungsabschnitt (2c) getrennt sind, der einen Hohlraum begrenzt, und dadurch, dass die offene Kontur einen Übergangsabschnitt (2d) begrenzt, der den mittleren Abschnitt (2b) mit einem zweiten seitlichen Abschnitt (2e) verbindet, der entgegengesetzt zum ersten seitlichen Abschnitt (2a) ist, wobei der zweite seitliche Abschnitt (2e) in einer zweiten Ebene gelegen ist, die von der ersten Ebene verschieden ist, **dadurch gekennzeichnet, dass** die Kontur des Schnitts des Verstärkungsprofils über die gesamte Länge (L) des Bandverstärkungsprofils (2) identisch ist, wobei das Bandverstärkungsprofil (2) ein Ende (2') in Form einer Abschrägung umfasst, das derart ausgestaltet ist, dass es bei einem Front- oder Heckaufprall auf das Fahrzeug bei geschlossener Stellung der Türstruktur (1) in ein vorderes Chassiselement (6) eindringt, das zum Chassis des Fahrzeugs beiträgt.

11. Verstärkungsprofil nach dem vorhergehenden Anspruch, **dadurch gekennzeichnet, dass** sich die erste und die zweite Ebene schneiden.

## Claims

1. Motor vehicle door structure (1) comprising a structural door box (3) and a fascia reinforcement profile (2), configured so as to at least take up compressive forces over its length (L) in the event of a frontal or rear impact on a vehicle provided with said structure (1), the structural box (3) and the fascia reinforcement profile (2) being configured and assembled together so as to delimit, between them, a first hollow body (4a) and a second hollow body (4b), each having a shape which is tubular and elongate along said length (L) of the fascia reinforcement profile (2), **characterized in that** a contour of the cutout of the reinforcement profile is identical over the entire length (L) of said fascia reinforcement profile (2), the fascia being a region of the bottom of the door at the interface with an opening (5) intended to receive a glazing pane, each hollow body (4a, 4b) having, in its length, a closed transverse cross section, **and in that,** the vehicle comprising a front chassis element (6) which forms part of the chassis of the vehicle and which allows the door structure to vary between a closed position and an open position relative to the chassis of said vehicle, the fascia reinforcement profile (2) comprises an end (2'), in the form of a taper, which is configured so as to penetrate into the front chassis element (6) in the event of a frontal or rear impact on the vehicle when the door structure (1) is in the closed position.

2. Door structure according to the preceding claim, **characterized in that** the fascia reinforcement profile (2) is obtained by stamping.

3. Door structure according to Claim 1 or 2, **characterized in that** a section of the fascia reinforcement profile (2), considered in a plane of section transverse to said length (L), has a contour which is open and configured so as to delimit a first lateral part (2a) and a central part (2b) which are in contact with said structural box (3) and are separated by a connecting part (2c) delimiting a cavity, said cavity delimiting, in conjunction with the structural box (3), the first hollow body (4a), **and in that** the open contour delimits a connection part (2d) linking the central part (2b) to a second lateral part (2e) which is at least partially in contact with the structural box (3), the second hollow body (4b) being at least partially delimited by the structural box (3) and the connection part (2d).

4. Door structure according to Claim 3, **characterized in that** the first lateral part (2a) and the central part (2b) are included in a first plane, **and in that** the second lateral part (2e) is included in a second plane which is parallel to or intersects with the first plane.

5. Door structure according to either of Claims 3 and 4, **characterized in that** the first and second lateral parts (2a, 2e) and the central part (2b) are attached to the structural box (3), in particular by welding, riveting or adhesive bonding.

6. Motor vehicle door comprising a structure according to one of Claims 1 to 5.

7. Door according to the preceding claim, **characterized in that** it comprises an exterior panel (8) which is configured so as to be visible from outside a vehicle provided with the door, said fascia reinforcement profile (2) being located between the structural box (3) and the exterior panel (8).

8. Door according to Claim 7, **characterized in that** it comprises a window (9) arranged between the fascia reinforcement profile (2) and the exterior panel (8).

9. Motor vehicle comprising a door according to one of Claims 6 to 8.

10. Fascia reinforcement profile (2) which is designed to be used in a motor vehicle door structure (1) according to one of Claims 1 to 5, with a section of the fascia reinforcement profile (2), considered in a plane of section transverse to the length (L) of said fascia reinforcement profile (2), has a contour which is open and configured so as to delimit a first lateral part (2a) and a central part (2b) which are included in a first plane and are separated by a connecting part (2c) delimiting a cavity, **and in that** the open contour delimits a connection part (2d) linking the central part (2b) to a second lateral part (2e) which is opposite the first lateral part (2a), said second lateral part (2e) being located in a second plane distinct from the first plane, **characterized in that** the contour of the cutout of the reinforcement profile is identical over the entire length (L) of said fascia reinforcement profile (2), the fascia reinforcement profile (2) comprising an end (2') in the form of a taper which is configured so as to penetrate into a front chassis element (6) which forms part of the chassis of the vehicle, in the event of a frontal or rear impact on the vehicle when the door structure (1) is in the closed position.

11. Reinforcement profile according to the preceding claim, **characterized in that** the first and second planes intersect.
